# EUROPEAN PATENT SPECIFICATION

(11) **EP 1 488 964 B1**
(45) Date of publication and mention of the grant of the patent: **31.05.2006**
(21) Application number: 03076888.1
(22) Date of filing: 17.06.2003
(51) Int. Cl.: B60R 21/09, B60N 3/06, B60T 7/06

(54) **Foot protection system**
Fuss-Schutzsystem
Système de protection pour les pieds

(43) Date of publication of application: 22.12.2004
(73) Proprietor: Ford Global Technologies, LLC., Dearborn MI 48126 (US)
(72) Inventor: Karlsson, Tomas, 444 42 Stenungsund (SE); Petersson, Daniel, 423 38 Torslanda (SE); Claesson, Max, 416 57 Göteborg (SE)
(74) Representative: Hammond, Andrew David

(56) References cited:
- EP-A- 1 010 588
- DE-A- 19 727 598
- GB-A- 1 278 919
- US-B1- 6 182 525
- US-B1- 6 349 965

## Description

### TECHNICAL FIELD

The present invention relates to a foot protection device for a driver of a vehicle.

### BACKGROUND OF THE INVENTION

Modern vehicles are designed to protect vehicle occupants in the event of a collision between the vehicle and a foreign object, such as another vehicle or a fixed object such as a tree, lamppost, etc. In the event of a head-on collision, it is more difficult to ensure adequate protection of the driver than of any passengers because of the necessity to have foot-operated pedals and a steering column in the driver foot-well of the vehicle. Should a collision be particularly forceful, there is a risk that the driver foot-well deforms due to intrusion of e.g. the steering column. Furthermore, since the driver will be thrown forward during such a collision, his/her feet may be injured by the pedals, particularly if the foot-well is deformed to any great extent. In order to reduce the risk of the driver's feet being thrown towards or past the pedals, it has been proposed to provide the vehicle floor with a raised portion on the driver's side of the pedals against which the heel(s) of the foot(feet) may abut.

In order to accommodate drivers of different height and/or leg length, it is known to provide vehicles with adjustable pedals, i.e. the pedals can be moved closer to or further away from the driver's seat. It is desirable to be able to ensure that vehicles equipped with adjustable pedals will also offer adequate protection for the feet of the driver.

US 6349965 B1 discloses a vehicle safety device for the protection of the feet of an occupant, in particular of a driver. The vehicle safety device comprises an adjusting device and a section of a floor of the vehicle in a region of the occupant's feet. The section is a movable section and can be coupled with the adjusting device so as to be moved by the device relative to the feet.

### SUMMARY OF THE INVENTION

It is therefore an object of the invention to provide a foot protection device for use with vehicles having adjustable pedals.

This object is achieved in accordance with the present invention by a foot protection device for a driver of a vehicle as claimed in claim 1.

Thus, according to a principal aspect of the present invention the foot protection device and the adjustable pedals move together to ensure that the foot protection device is always positioned in a crash-optimal position relatively to the pedals.

By providing the claimed foot protection device with such support means at either end of the elongate heel support, a stable structure is attained which can be optimally positioned in relation to the pedals so as to ensure increased protection for drivers of different heights. Foot and lower leg injuries that today are caused by the driver being thrown forward during a crash could be reduced. Furthermore, the foot protection device provides improved foot stability (twisting of a driver's foot can be reduced and even prevented) and reduce transmission of energy to foot. Performance is essentially the same over entire range of adjustment of pedals.

Preferably, said elongate heel support is rotatably mounted between said first and second support arms, so that the heel support can roll on a floor structure of a vehicle.

According to another embodiment of the present invention, there is further provided a supplementary floor panel provided with recesses for accomodating pedals when retracted, said floor panel being mounted between said elongate heel support and at least said first support arm for displacement with said foot protection device. Typically, an actuator decouples the pedal (or pedals) and effects full retraction of the pedals into the recesses or openings of the supplementary floor panel.

In this way a flat vehicle floor surface is attained which can be optimally positioned in relation to the pedals so as to ensure increased protection for drivers of different heights. The supplementary floor is attached to a frame that will follow the pedals during adjustment for a good driving position. The supplementary floor panel will thereby help to avoid irregular shape in an impact area due to intrusion of steering gear.

Other features and advantages of the invention will be better understood from the following description describing certain specific embodiments of the invention taken together with the accompanying drawings.

### BRIEF DESCRIPTION OF DRAWINGS

The invention will now be described in greater detail by way of example only and with reference to the attached drawings, in which:
- FIG. 1: is a schematic perspective view of a foot protection device according to an embodiment of the invention;
- FIG. 2: is a schematic perspective view of the foot protection device shown in FIG. 1 when mounted to a vehicle, corresponding to the foot protection device of the present invention;
- FIG. 3: is a schematic perspective view corresponding to FIG. 2, though illustrating the invention when the vehicle undergoes a violent collision;
- FIG. 4: is a schematic side-view of the foot protection device of FIG. 2, and
- FIG. 5: is a side view of foot protection device of FIG. 3.

### DETAILED DESCRIPTION OF PREFERRED EMBODIMENTS

As required, detailed embodiments of the present invention are disclosed herein; however, it is to be understood that the disclosed embodiments are merely examples of the invention that may be further embodied in various and alternative forms other than described below. The drawings are not necessarily to scale, and some mechanisms may be exaggerated or minimized to show details of particular components or features. Therefore, specific structural and functional details disclosed herein are not to be interpreted as limiting in any sense, but merely form a basis for the claims and as a representative basis for enabling one skilled in the art to variously put the present invention into practice.

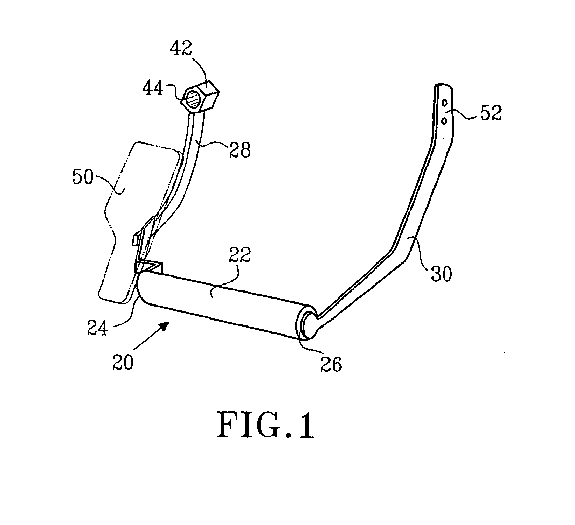

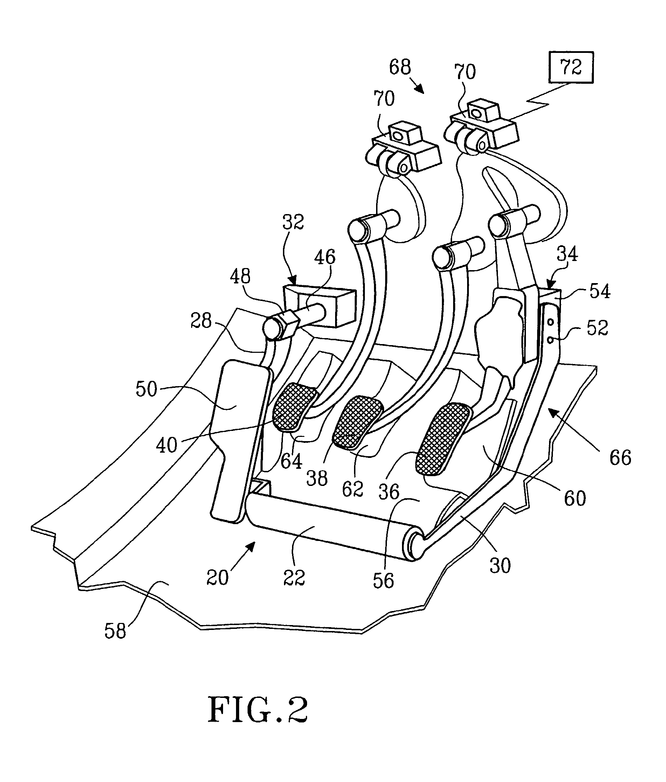

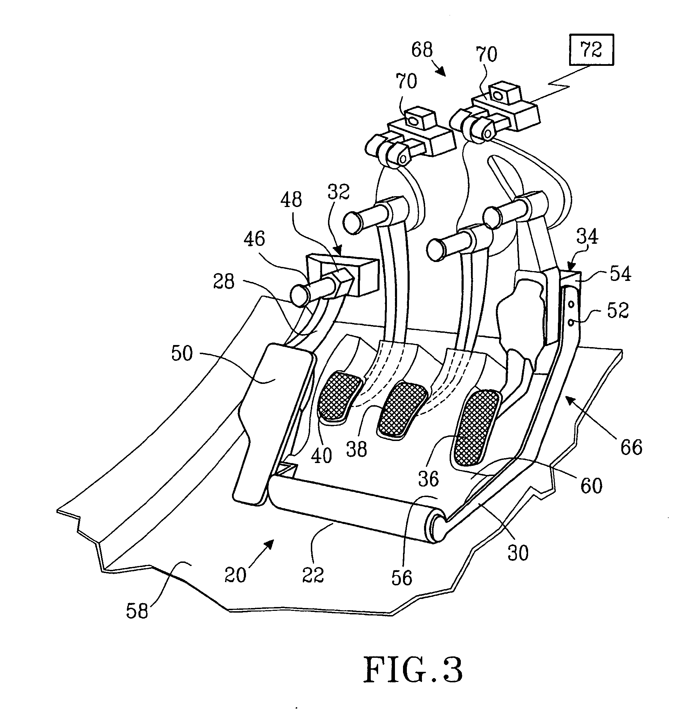

In the drawings, reference numeral 20 generally denotes a foot protection device according to the present invention. With particular reference to FIG. 1, the foot protection device 20 comprises an elongate heel support 22 having a first end 24 and a second end 26. The first and second ends are associated with first and second support means 28, 30, respectively. In the drawings, the first and second support means 28, 30 are depicted as first and second support arms, though it will be apparent to the skilled person that any suitable support means could be employed. For example, the first support means could be an arm and the second support means could be a slide carriage adapted for co-operation with a runner or rail mounted to the vehicle. Irrespective of their form, and as is apparent from Figs. 2 and 3, the first and second support means 28, 30 are adapted to co-operate with mounting means 32, 34 in the vehicle such that the foot protection device 20 is displaceable in the length direction of the vehicle to thereby position the elongate heel support 22 below the pedals 36, 38, 40 of the vehicle.

In the illustrated embodiment, the first support means 28 of the foot protection device 20 comprises a first support arm 28 extending from the first end 24 of the elongate heel support 22. Towards or at its end remote from the elongate heel support 22, the first support arm 28 is provided with first attachment means 42 which is adapted to co-operate with the mounting means 32 in the vehicle. In one embodiment of the invention, the first attachment means 42 on the first support arm 28 comprises a slide arrangement 44 for co-operation with a guide member 46, for example a rectilinear rod, constituting at least a part of the mounting means 32 in the vehicle. The slide arrangement 44 may comprise a substantially cylindrical housing 48 forming an extension of the first support arm 28. In this respect, it is to be noted that the expression "substantially cylindrical" is intended to encompass any hollow form, be it closed or partially open. Important for this embodiment of the invention is only that the housing 48 is capable of receiving the guide member 46. Thus, and as is illustrated in FIGS. 2 and 3, the substantially cylindrical housing 48 is adapted to receive the guide member 46 such that the first support arm 28 could then move along the guide member 46.

In a particular embodiment of the invention, the first support arm 28 is adapted to provide a foot-rest 50. Typically, the foot-rest is provided to enable a driver to rest his/her left foot. The foot-rest 50 may be constituted by a plate mounted to the first support arm, for example by fasteners such as nuts and bolts, rivets or screws, or, depending on the materials of the constituent components, it may be welded thereto. Alternatively, the foot-rest may be integrally formed with the first support arm, for example by being cast together with the support arm.

In the illustrated embodiments, the second support means 30 of the foot protection device 20 comprises a second support arm 30 extending from the second end 26 of the elongate heel support 22. The second support arm 30 is provided towards or at its end remote from the elongate heel support 22 with second attachment means 52 adapted to co-operate with the mounting means 34 in the vehicle. As shown in FIGS. 2 and 3, The second attachment means 52 on the second support arm 30 is adapted to co-operate with an accelerator pedal mounting 54 constituting at least a part of the mounting means in the vehicle. Since, in this described embodiment of the invention, the second attachment means 52 is adapted to co-operate with the accelerator pedal mounting 54, any adjustment of the accelerator pedal 26, i.e. an adjustment of its position in the length direction of the vehicle, will automatically effect a corresponding adjustment of the position of the foot protection device 20.

The elongate heel support 22 may have any suitable shape. To enable one and the same shape to be used for drivers of any height and build, a suitable shape is substantially cylindrical. Both for reasons of comfort and ease of adjustment, the elongate heel support 22 may be rotatably mounted between the first and second support arms 28, 30. For instance, the heel support 22 may have a concentric cylindrical shape. Purely by way of example, the elongate heel support 22 may have a length of from 150 mm to 300 mm, preferably about 200 mm, and a diameter of from 20 mm to 50 mm, preferably about 30 mm. The heel support 22 may be provided with a coating of rubber being labelled, for instance, with a logotype, or with the same carpet as provided on the floor 58 of the vehicle. Any desired appearance could of course be provided, almost without limitation; however, preferably the heel support 22 is adapted to be easily movable across the floor even if stones, dirt or the like is present.

To further increase safety, the above described foot protection device 20 may also include a supplementary floor panel 56 mounted between the elongate heel support 22 and at least the first support arm 28. In this manner, the supplementary floor panel 56 will move together with the remainder of the foot protection device 20. It is to be noted that the expression "supplementary floor panel" denotes a structure which is intended to lie on or over the existing floor 58 of the vehicle. As illustrated in FIGS. 2 and 3, the supplementary floor panel 56 is intended to extend in a forwards direction (seen in the normal direction of travel of the vehicle) from, or in the vicinity of, the elongate heel support 22 to occupy a position between the existing floor 58 and the pedals 36, 38, 40. Typically, the supplementary floor panel 56 is made either from sheet steel or aluminium, or from a plastics material which may be reinforced with suitable fibres. The supplementary floor panel 56 comprises a number of recesses or openings 60, 62, 64 which are adapted to accommodate the pedals when the pedals are fully retracted, as shown in FIG. 3. Accordingly, the recesses or openings 60, 62, 64 should be dimensioned with respect to the pedals so that, in their fully retracted position, the pedals 36, 38, 40 form a surface substantially flush with the upper surface of the supplementary floor panel 56. In this manner, the foot-well of the vehicle is substantially freed of any protrusions upon which the driver's feet may be caught.

In order to effect full retraction of the pedals, as illustrated in FIG. 3, a pedal assembly 68 may include at least one actuator 70. In a manner known per se, the actuator is adapted to be actuated in response to a signal initiated by a crash sensor 72. By means of a suitable linkage, when actuated the actuator 70 decouples the pedal (or pedals) and effects full retraction of the pedals into the recesses or openings 60, 62, 64 of the supplementary floor panel 56. Obviously, braking of the vehicle is then effected automatically without any driver involvement. It should be noted that pedal decoupling may be provided even in embodiments of the invention which do not include the supplementary floor panel. The number of actuators 70 will depend primarily on the type of transmission which is fitted to the vehicle. Thus, if the transmission does not require manual operation of a clutch, the pedal assembly 68 need include only one actuator to effect retraction of the accelerator pedal 36 and brake pedal 38. Should the pedal assembly include a clutch pedal 40, the clutch pedal may be provided with a dedicated actuator.

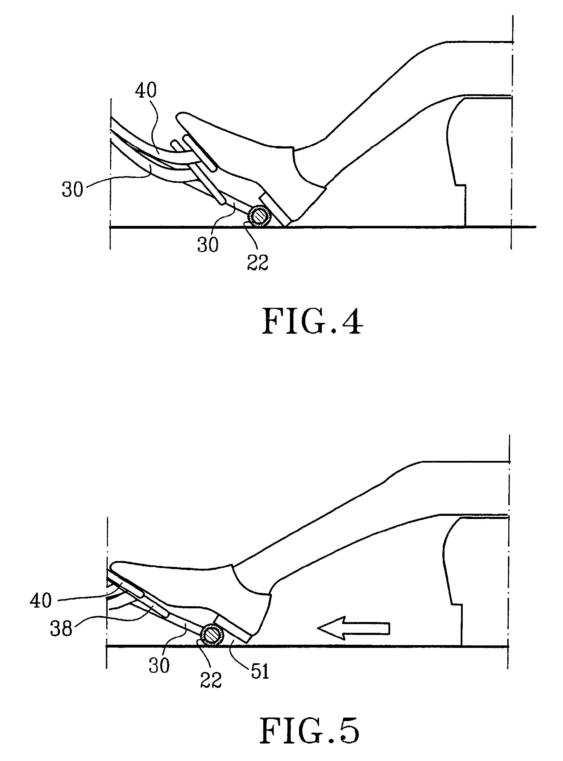

Finally, FIGS. 4 and 5 schematically illustrate how the foot protection device and foot protection system of the present invention may be used by a driver. The elongate heel support 22 supports the heel of a drivers foot or shoe. The pedals are operated by the foot or feet pivoting about the heel support 22. In the event of a head-on collision, the driver is thrown forwards, and the heel support tends to hinder forward progress of the feet deeper into the foot-well.

A type of vehicle having adjustable pedals such as a car could benefit from the inventive device. Also, the adjusting mechanism for the pedals could be any suitable type, such as a power-operated push rod, or any other suitable type of mechanism. As has been described, it is advantageous if the foot protection device of the present invention is adjusted simultaneously, i.e. automatically, with the pedal adjustment. Nevertheless, it is to be understood that means may be provided to permit the position of the foot protection device to be altered with respect to the position of the pedals to thereby provide individual adaptation of the foot protection system to each driver.

## Claims

1. A foot protection device (20) for a foot or feet of a driver of a vehicle the vehicle being provided with a number of adjustable foot-actuated pedals (36, 38, 40) situated in a foot-well, the foot protection device (20) comprising an elongate heel support (22) having a first end (24) and a second end (26) said first and second ends being associated with first and second support means (28, 30) adapted to co-operate with mounting means (32, 34) in said vehicle such that the foot protection device (20) is displaceable in the length direction of the vehicle to thereby position said elongate heel support (22) below said number of pedals wherein the elongate heel support (22) is adapted to extend in the transverse direction of the vehicle and is positioned between the floor (58) and said number of adjustable foot-actuated pedals (36, 38, 40) to hinder forward progress of the feet deeper into the foot-well in the event of a collision

2. The foot protection device (20) of claim 1, wherein said first support means (28) comprises a first support arm (28) extending from said first end (24) of said elongate heel support (22), said first support arm (28) being provided with first attachment means (42) adapted to co-operate with said mounting means (32) in said vehicle.

3. The foot protection device (20) according to claim 2, wherein said first attachment means (42) on said first support arm (28) comprises a slide arrangement (44) for co-operation with a guide member (46) constituting at least a part of said mounting means (32) in said vehicle.

4. The foot protection device (20) as claimed in claim 3, wherein said slide arrangement (44) comprises a cylindrical housing (48) forming an extension of said first support arm (28), said cylindrical housing (48) being adapted to receive said guide member (46) such that said first support arm (28) can move along said guide member.

5. The foot protection device (20) as claimed in any one of claims 2 to 4, wherein said first support arm (28) is adapted to provide a foot-rest (50).

6. The foot protection device according to any one of the preceding claims, wherein said second support means (30) comprises a second support arm (30) extending from said second end (26) of said elongate heel support (22), said second support arm (30) being provided with second attachment means (52) adapted to co-operate with said mounting means (34) in said vehicle.

7. The foot protection device (20) as claimed in claim 6, wherein said second attachment means (52) on said second support arm (30) is adapted to co-operate with an accelerator pedal mounting (54) constituting at least a part of said mounting means (34) in said vehicle.

8. The foot protection device (20) as claimed in any one of the preceding claims, wherein said elongate heel support (22) is substantially cylindrical.

9. The foot protection device (20) as claimed in claim 8, wherein said elongate heel support (22) is rotatably mounted between said first and second support arms (28, 30).

10. The foot protection device (20) as claimed in any one of the claims 2-9, wherein said device (20) further comprises a supplementary floor panel (56) mounted between said elongate heel support (22) and at least said first support arm (28) for displacement with said foot protection device (20).

11. The foot protection device (20) as claimed in claim 10, wherein said supplementary floor panel (56) comprises a number of recesses or openings (60, 62, 64) adapted to accommodate said number of pedals (36, 38, 40) when said pedals (36, 38, 40) are fully retracted.

12. The foot protection device (20) as claimed in claim 10 or 11, wherein said device (20) further comprises at least one actuator (70) to effect full retraction of said number of adjustable pedals (36, 38, 40)

13. The foot protection device (20) as claimed in any one of the claims 10-12, wherein said at least one actuator (70) is adapted to be actuated in response to a signal initiated by a crash sensor (72).

14. The foot protection device (20) as claimed in claim 1, wherein said device (20) is adapted to move together with said number of adjustable foot-actuated pedals (36,38,40)

## Patentansprüche

1. Fuß-Schutzvorrichtung (20) für einen Fuß oder die Füße eines Fahrers eines Fahrzeugs, wobei das Fahrzeug mit einer Anzahl von einstellbaren fußbetätigten Pedalen (36, 38, 40) versehen ist, die sich in einer Fußwanne befinden, wobei die Fuß-Schutzvorrichtung (20) einen länglichen Fersenträger (22) mit einem ersten Ende (24) und einem zweiten Ende (26) umfasst, wobei das erste und das zweite Ende ersten bzw. zweiten Unterstützungsmitteln (28, 30) zugeordnet sind, die so beschaffen sind, dass sie mit Montagemitteln (32, 34) in dem Fahrzeug zusammenwirken, derart, dass die Fuß-Schutzvorrichtung (20) in Längsrichtung des Fahrzeugs verlagerbar ist, um **dadurch** den länglichen Fersenträger (22) unter den mehreren Pedalen zu positionieren, wobei der längliche Fersenträger (22) so beschaffen ist, dass er sich in Querrichtung des Fahrzeugs erstreckt und zwischen dem Boden (28) und der Anzahl von einstellbaren fußbetätigten Pedalen (36, 38, 40) angeordnet ist, um im Fall einer Kollision eine Vorwärtsbewegung der Füße weiter in die Fußwanne zu verhindern.

2. Fuß-Schutzvorrichtung (20) nach Anspruch 1, bei der die ersten Unterstützungsmittel (28) einen ersten Unterstützungsarm (28) umfassen, der sich von dem ersten Ende (24) des länglichen Fersenträgers (22) erstreckt, wobei der erste Unterstützungsarm (28) mit ersten Befestigungsmitteln (42) versehen ist, die so beschaffen sind, dass sie mit den Montagemitteln (32) in dem Fahrzeug zusammenwirken.

3. Fuß-Schutzvorrichtung (20) nach Anspruch 2, bei der die ersten Befestigungsmittel (42) an dem ersten Unterstützungsarm (28) eine Gleitanordnung (44) umfassen, die mit einem Führungselement (46) zusammenwirkt, das wenigstens einen Teil der Montagemittel (32) im Fahrzeug bildet.

4. Fuß-Schutzvorrichtung (20) nach Anspruch 3, bei der die Gleitanordnung (44) ein zylindrisches Gehäuse (48) umfasst, das eine Verlängerung des ersten Unterstützungsarms (28) bildet, wobei das zylindrische Gehäuse (48) so beschaffen ist, dass es das Führungselement (46) aufnimmt, derart, dass sich der erste Unterstützungsarm (28) längs des Führungselements bewegen kann.

5. Fuß-Schutzvorrichtung (20) nach einem der Ansprüche 2 bis 4, bei der der erste Unterstützungsarm (28) so beschaffen ist, dass er eine Fußauflage (50) schafft.

6. Fuß-Schutzvorrichtung nach einem der vorhergehenden Ansprüche, bei der die zweiten Unterstützungsmittel (30) einen zweiten Unterstützungsarm (30) aufweisen, der sich von dem zweiten Ende (26) des länglichen Fersenträgers (22) erstreckt, wobei der zweite Unterstützungsarm (30) mit zweiten Befestigungsmitteln (52) versehen ist, die so beschaffen sind, dass sie mit den Montagemitteln (34) in dem Fahrzeug zusammenwirken.

7. Fuß-Schutzvorrichtung (20) nach Anspruch 6, bei der die zweiten Befestigungsmittel (52) an dem zweiten Unterstützungsarm (30) so beschaffen sind, dass sie mit einer Fahrpedal-Anbringungseinrichtung (54), die wenigstens einen Teil der Montagemittel (34) im Fahrzeug bilden, zusammenwirkt.

8. Fuß-Schutzvorrichtung (20) nach einem der vorhergehenden Ansprüche, bei der der längliche Fersenträger (22) im Wesentlichen zylindrisch ist.

9. Fuß-Schutzvorrichtung (20) nach Anspruch 8, bei der der längliche Fersenträger (22) zwischen dem ersten und dem zweiten Unterstützungsarm (28, 30) drehbar angebracht ist.

10. Fuß-Schutzvorrichtung (20) nach einem der Ansprüche 2-9, wobei die Vorrichtung (20) ferner eine zusätzliche Bodenplatte (56) aufweist, die zwischen dem länglichen Fersenträger (22) und zumindest dem ersten Unterstützungsarm (28) angebracht ist, um sich mit der Fuß-Schutzvorrichtung (20) zu verlagern.

11. Fuß-Schutzvorrichtung (20) nach Anspruch 10, bei der die zusätzliche Bodenplatte (56) zahlreiche Aussparungen oder Öffnungen (60, 62, 64) aufweist, die so beschaffen sind, dass sie die Anzahl von Pedalen (36, 38, 40) aufnehmen, wenn die Pedale (36, 38, 40) vollständig zurückgezogen sind.

12. Fuß-Schutzvorrichtung (20) nach Anspruch 10 oder 11, wobei die Vorrichtung (20) ferner wenigstens einen Aktor (70) aufweist, der ein vollständiges Zurückziehen der Anzahl von einstellbaren Pedalen (36, 38, 40) bewirkt.

13. Fuß-Schutzvorrichtung (20) nach einem der Ansprüche 10-12, bei der der wenigstens eine Aktor (70) so beschaffen ist, dass er in Reaktion auf ein durch einen Crash-Sensor (72) ausgelöstes Signal betätigt wird.

14. Fuß-Schutzvorrichtung (20) nach Anspruch 1, wobei die Vorrichtung (20) so beschaffen ist, dass sie sich zusammen mit der Anzahl von einstellbaren fußbetätigten Pedalen (36, 38, 40) bewegt.

## Revendications

1. Dispositif de protection pour le/les pieds (20) d'un conducteur de véhicule, le véhicule étant équipé d'un certain nombre de pédales ajustables (36, 38, 40) positionnées dans l'espace pédalier, ledit dispositif de protection (20) comprenant un repose-talon allongé (22) dont les deux extrémités (24) et (26) sont associées à deux bras supports (28, 30) conçus pour s'adapter aux blocs de fixation (32, 34) dudit véhicule, de manière à ce que le dispositif de protection des pieds (20) soit réglable en longueur pour positionner ledit repose-talon allongé (22) sous les pédales concernées, et où le repose-talon (22) est adapté pour s'allonger sur la largeur du véhicule, et est positionné entre le plancher (58) et les pédales ajustables (36, 38, 40) afin d'empêcher les pieds de glisser en avant dans l'espace pédalier en cas d'accident.

2. Dispositif de protection pour les pieds (20) selon la revendication 1, dans lequel le premier moyen support (28) comprend un premier bras support (28) partant de ladite première extrémité (24) dudit repose-talon (22), ledit bras de support étant équipé avec un moyen de fixation (42) conçu pour s'adapter au bloc de fixation (32) du véhicule concerné.

3. Dispositif de protection pour les pieds (20) selon la revendication 2, dans lequel ledit moyen de fixation (42) sur le premier bras support (28) comprend une coulisse (44) conçue pour coulisser sur une tige-guide (46) constituant au moins une partie dudit bloc de fixation (32) dans le véhicule concerné.

4. Dispositif de protection pour les pieds (20) selon la revendication 3, dans lequel ladite coulisse (44) comprend une enveloppe cylindrique (48) formant une extension dudit premier bras support (28), ladite enveloppe cylindrique (48) étant conçue pour recevoir ladite tige-guide (46) de manière à permettre au premier bras de support (28) de se déplacer le long de ladite tige-guide.

5. Dispositif de protection pour les pieds (20) selon n'importe laquelle des revendications 2 à 4, dans lequel ledit premier bras support (28) est conçu pour recevoir un repose-pied (50).

6. Dispositif de protection pour les pieds (20) selon n'importe laquelle des revendications précédentes, dans lequel le second moyen de support (30) comprend un second bras support (30) partant de ladite deuxième extrémité (26) dudit repose-talon (22), ce second bras support (30) étant équipé d'un second moyen de fixation (52) conçue pour s'adapter au bloc de fixation (34) dans le véhicule concerné.

7. Dispositif de protection pour les pieds (20) selon la revendication 6, dans lequel ledit moyen de fixation (52) sur ledit second bras support (30) est conçu pour s'adapter au bloc de fixation (54) d'une pédale d'accélérateur constituant au moins une partie du bloc de fixation (34) dans le véhicule concerné.

8. Dispositif de protection pour les pieds (20) selon n'importe laquelle des revendications précédentes, dans lequel le repose-talon (22) est essentiellement cylindrique.

9. Dispositif de protection pour les pieds (20) selon la revendication 8, dans lequel ledit repose-talon (22) peut tourner entre les deux bras supports (28, 30) sur lesquels il est monté.

10. Dispositif de protection pour les pieds (20), selon n'importe laquelle des revendications 2 à 9, dans lequel ledit dispositif (20) comprend également un panneau de plancher supplémentaire (56) monté entre le repose-talon (22) et au moins ledit premier bras support (28) pour un déplacement avec ledit dispositif de protection pour les pieds (20).

11. Dispositif de protection pour les pieds (20) selon la revendication 10, dans lequel le panneau de plancher supplémentaire (56) comprend un certain nombre de logements ou ouvertures (60, 62, 64) conçus pour recevoir lesdites pédales (36, 38, 40) quand ces dites pédales sont complètement rentrées.

12. Dispositif de protection pour les pieds (20) selon la revendication 10 ou 11, dans lequel ledit dispositif (20) comprend également au moins un actionneur (70) pour effectuer le retrait complet desdites pédales ajustables (36, 38, 40).

13. Dispositif de protection pour les pieds (20) selon n'importe laquelle des revendications 10 à 12, dans lequel au moins un actionneur (70) est conçu pour être activé en réponse à un signal initié par un capteur en cas d'accident (72).

14. Dispositif de protection pour les pieds (20) selon la revendication 1, dans lequel ledit dispositif (20) est conçu pour bouger en même temps que les différentes pédales ajustables (36, 38, 40).
